# EUROPÄISCHE PATENTSCHRIFT

(11) **EP 1 964 598 B1**
(45) Veröffentlichungstag und Bekanntmachung des Hinweises auf die Patenterteilung: **30.09.2009**
(21) Anmeldenummer: 08150669.3
(22) Anmeldetag: 25.01.2008
(51) Int. Cl.: A63G 7/00, B60R 21/02

(54) **Fahrgastrückhaltevorrichtung für Fahrgeschäfte**
Passenger restraint device for fairground rides
Dispositif de retenue du passager de véhicule pour attractions foraines

(30) Priorität: 26.01.2007 DE 202007001485 U
(43) Veröffentlichungstag der Anmeldung: 03.09.2008
(73) Patentinhaber: ZIERER Karussell- und Spezialmaschinenbau GmbH, 94469 Deggendorf (DE)
(72) Erfinder: Steininger, Walter, 94560, Offenberg (DE); Kraus, Erwin, 94560, Offenberg (DE); Gmeinwieser, Roland, 94560, Offenberg (DE)
(74) Vertreter: Birken, Lars

(56) Entgegenhaltungen:
- EP-A- 1 020 212
- WO-A-99/22829
- WO-A-99/22830
- GB-A- 2 149 313

## Beschreibung

Die Erfindung betrifft eine Fahrgastrückhaltevorrichtung für Fahrgeschäfte, umfassend: einen Rückhaltekörper mit einer Beinauflagefläche, die zum Auflegen auf die Oberschenkel des Fahrgastes ausgebildet ist, einen ersten Führungshebel, der an seinem ersten Ende am Rückhaltekörper befestigt ist und mit seinem zweiten Ende schwenkbar im Bodenbereich vor einem Fahrgastsitz eines Fahrgeschäftes solcherart angekoppelt ist, dass der Rückhaltekörper in Bezug auf den Fahrgastsitz um eine quer zur Längsachse des Oberschenkels des sitzenden Fahrgastes liegende erste untere Achse aus einer geöffneten Stellung in eine geschlossene Stellung verschwenkt werden kann.

Eine Fahrgastrückhaltevorrichtung dieser Art ist aus EP 1 020 212 B1 bekannt. Eine solche Fahrgastrückhaltevorrichtung dient dazu, einen Fahrgast in einem Sitz solcherart zu fixieren, dass er bei den durch das Fahrgeschäft auftretenden Kräften und Beschleunigungen nicht aus dem Sitz geschleudert wird. Das bekannte Fahrgastrückhaltesystem kann zwar diese Rückhaltefunktion für Fahrgeschäfte mit bestimmter Bewegungsform weitestgehend sicherstellen, weist jedoch noch eine Reihe von Nachteilen auf. So besteht bei der bekannten Rückhaltevorrichtung insbesondere die Gefahr, dass sich der Fahrgast durch aktive Bewegungen seiner Beine der Rückhaltefunktion der Rückhaltevorrichtung vollständig oder teilweise entzieht und somit in die Gefahr begibt, dass er durch die Bewegungen des Fahrgeschäftes teilweise oder vollständig aus dem Sitz geschleudert wird.

Weiterhin hat sich gezeigt, dass die bekannte Fahrgastrückhattevorrichtung zwar für Personen einer bestimmten, weitestgehend einheitlichen Körperstatur passend ausgelegt und konstruiert werden kann, jedoch nicht in der Lage ist, mit einer einzigen Auslegung und Konstruktion Fahrgäste unterschiedlicher Statur, beispielsweise schlanke und korpulente Fahrgäste, Erwachsene und Kinder in sicherer Weise zu fixieren.

Es besteht daher ein Bedarf für eine Rückhaltevorrichtung, die sowohl verhindert, dass der Fahrgast durch aktive Bewegung in eine unsichere Position gelangt als auch eine sichere Fixierung von Personen unterschiedlicher Statur ermöglicht. Die Erfindung strebt an, diesen Bedarf zu erfüllen.

Weiterhin ist es innerhalb dieses Bestrebens der Erfindung ein Ziel, eine Fahrgastrückhaltevorrichtung bereitzustellen, die den Fahrgast zwar sicher fixiert, dabei jedoch eine subjektiv möglichst geringe Bewegungsbeschränkung verursacht, sondern stattdessen ein möglichst freies Bewegungsgefühl vermittelt, wodurch der Eindruck des Fahrgeschäftes und das Bewegungserlebnis verstärkt wird.

Der Erfindung liegt die Aufgabe zugrunde, eine Rückhaltevorrichtung bereitzustellen, welche zumindest einige, vorzugsweise alle obengenannten Bestrebungen und Ziele erreicht.

Diese Aufgabe wird erfindungsgemäß durch eine eingangs beschriebene Fahrgastrückhaltevorrichtung erreicht, bei welcher der erste Führungshebel an seinem ersten Ende um eine parallel zur ersten, unteren Achse liegende erste, obere Achse schwenkbar mit dem Rückhaltekörper gekoppelt ist und benachbart zum ersten Führungshebel ein zweiter Führungshebel angeordnet ist, der funktionell in einer quer zur ersten unteren Achse liegenden Richtung vom ersten Führungshebel beabstandet ist, und solcherart an seinem ersten Ende um eine parallel und beabstandet zur ersten oberen Achse angeordnete zweite, obere Achse schwenkbar mit dem Rückhaltekörper gekoppelt ist und an seinem zweiten Ende um eine parallel und beabstandet zur ersten unteren Achse angeordnete zweite, untere Achse schwenkbar im Bereich der Fahrgast-Fußauflage eines Fahrgeschäftes angekoppelt ist, dass der Rückhaltekörper durch den ersten und zweiten Führungshebel nach Art einer Parallelogramm- oder Trapez-Hebel-Anordnung geführt ist.

Durch die solcherart ausgebildete Fahrgastrückhaltevorrichtung wird der in einem Fahrgastsitz sitzende Fahrgast des Fahrgeschäftes durch Auflage der Beinauflagefläche des Rückhaltekörpers auf die Oberseite seiner Oberschenkel ideal fixiert, wobei die spezifische Ausgestaltung der Kinematik durch den ersten und zweiten Führungshebel es ermöglicht, dass einerseits Fahrgäste unterschiedlicher Statur in gleicher Weise sicher fixiert werden und andererseits hierbei für jede Körperstatur eine ideale Positionierung der Beinauflagefläche bis in den Beckenbereich des Fahrgastes erreicht wird. Die sichere Fixierung des Fahrgastes wird insbesondere durch die Position der zum Fahrgast weisenden Rückhaltekörpers Rückhalteeinheit erzielt, die aufgrund der Bewegungsgeometrie des System unabhängig von der Körperstatur des Fahrgastes immer die ideale Halteposition in der Hüftbeuge einnimmt. Die erfindungsgemäße Fahrgastrückhaltevorrichtung kann dabei sowohl für Kinder als auch für Erwachsene verwendet werden, ohne dass hierzu unterschiedliche Konstruktionen oder Dimensionierungen der Vorrichtung erforderlich wären. Durch die Ausführung mit erstem und zweitem Führungshebel und beidseitig schwenkbarer Lagerung sowohl der Führungshebel im Bodenbereich vor dem Fahrgastsitz, d.h. letztendlich zum Chassis der Fahrgastgondel des Fahrgeschäftes, als auch in der schwenkbaren Ankopplung beider Führungshebel an dem Rückhaltekörper wird der vom Erfinder erkannte Nachteil bekannter Rückhaltevorrichtungen, nämlich dass diese nur eine Schwenkbewegung des Rückhaltekörpers um die bodennahe Achse ausführen, vermieden und anstelle dessen eine kombinierte horizontale/vertikale Verschiebung des Rückhaltekörpers erreicht, wobei diese entweder ohne Verschwenkung des Rückhaltekörpers um eine horizontale Achse stattfindet (im Falle der Parallelogramm-Anordnung) oder eine gezielte Verschwenkung um eine solche horizontale Achse erzielt wird (im Falle der Trapez-Hebel-Anordnung).

Im Sinne der Erfindung ist unter einem Führungshebel eine Stange oder dergleichen zu verstehen, welche beidseitig schwenkbar gelagert ist und sowohl Kräfte überträgt, welche der Führung des Rückhaltekörpers dienen als auch solche, welche der letztlichen Fixierung des Fahrgastes dienen. Dabei können erster und zweiter Führungshebel diese Führungs- und Fixierungsaufgaben gemeinsam übernehmen oder einer der beiden Führungshebel kann insbesondere zur Aufnahme und Übertragung der Fixierungskräfte dimensioniert sein, wohingegen der andere Führungshebel in erster Linie für Führungsaufgaben dimensioniert ist.

Die erfindungsgemäße Fahrgastrückhaltevorrichtung eignet sich aufgrund ihrer sicheren Fixierung von Fahrgästen im Bezug auf jegliche Bewegungs- und Beschleunigungsrichtungen für Fahrgeschäfte aller Art, umfassend beispielsweise Achterbahnen mit allen Fahrfiguren wie Looping, Corkscrew, Helix, Airtime u.dgl., sowie Rundfahrgeschäfte mit Mehrfachbewegungen, insbesondere Überschlag und Überkopffahrt und dergleichen.

Die erfindungsgemäße Fahrgastrückhaltevorrichtung kann gemäß einer ersten bevorzugten Ausführungsform fortgebildet werden, indem der erste und zweite Führungshebel parallel zueinander geführt sind. Auf diese Weise wird eine Parallelogramm-Führung des Rückhaltekörpers erzielt, welche sich für viele Anordnungen in Bezug auf den Fahrgastsitz als besonders geeignet herausgestellt hat. Bei dieser Ausgestaltung kann der Rückhaltekörper folglich durch den ersten und zweiten Führungshebel auf einer definierten Kreisbahn bewegt werden, ohne dass hierbei eine Rotation des Rückhaltekörpers um eine parallel zu den unteren oder oberen Achsen der Führungshebel-Lagerungen liegende Achse erfolgt.

Weiterhin ist es bevorzugt, wenn der erste und zweite Führungshebel in Richtung der Längsachse des Oberschenkels des sitzenden Fahrgastes hintereinander angeordnet sind. Diese Anordnungsweise ermöglicht einerseits eine effektive Beabstandung der beiden oberen bzw. der beiden unteren Schwenkachsen in Längsrichtung des Oberschenkels des sitzenden Fahrgastes und erlaubt andererseits eine Anordnung der beiden Führungshebel in schlanker Bauweise zwischen den Beinen des Fahrgastes. Neben dieser Anordnung mit einem ersten und einem zweiten Führungshebel sollen von der Erfindung auch Anordnungen mit mehr als einem ersten und einem zweiten Führungshebel umfasst sein, beispielsweise Anordnungen, in denen links und rechts von den Beinen des Fahrgastes jeweils ein erster und zweiter Führungshebel angeordnet ist oder Anordnungen, in denen mehrere solcher Führungshebel für mehrere Rückhaltekörper gemeinsam eingesetzt werden, welche Fahrgäste zurückhalten, die in einer Reihe nebeneinander sitzen.

Die erfindungsgemäße Fahrgastrückhaltevorrichtung kann weiter fortgebildet werden durch zumindest einen Linearaktuator zum Verschwenken des Rückhaltekörpers zwischen der geöffneten und der geschlossenen Stellung, der mit seinem ersten Ende schwenkbar mit dem ersten oder zweiten Führungshebel gekoppelt ist und mit seinem zweiten Ende schwenkbar im Bodenbereich vor dem Fahrgastsitz des Fahrgeschäftes befestigt ist. Der Linearaktuator oder die mehreren Linearaktuatoren können beispielsweise als Sperrzylindereinheiten ausgebildet sein, die eine Sperrfunktion über elektrisch betätigte Magnetventile ausüben und zugleich eine automatische Öffnung und/oder Schließung der Fahrgastrückhaltevorrichtung erlauben. Die Linearaktuatoren können dabei bevorzugt einseitig an einem der beiden Führungshebel angelenkt sein und auf der anderen Seite am Chassis der Fahrgastgondel oder alternativ auf der anderen Seite am anderen Führungshebel angelenkt sein, um die gewünschte Bewegung und Sperrung zu erzielen.

Die eingangs beschriebenen oder die zuvor erläuterten Fahrgastrückhaltevorrichtungen können weiterhin gemäß eines weiteren Aspekts der Erfindung fortgebildet werden durch einen Unterschenkelbügel, der mit dem ersten und/oder zweiten Führungshebel gekoppelt und solcherart quer zur Längsachse des Unterschenkels des sitzenden Fahrgastes angeordnet ist, dass durch Anliegen des Unterschenkelbügels an der Vorderseite der Unterschenkel des sitzenden Fahrgastes ein Kniebeugewinkel von mindestens 90°, vorzugsweise 100° erzwungen wird. Aufgrund der Biomechanik des menschlichen Hüft- und Kniegelenks wird ein aktives Herauswinden eines Fahrgastes aus einer Rückhaltevorrichtung insbesondere dann ermöglicht, wenn die Unterschenkel frei beweglich sind. Zudem kann ein solches aktives Herauswinden insbesondere dann erfolgen, wenn der Fahrgast in der Lage ist, die Beine zu strecken, d.h. einen Kniebeugewinkel von 0° einzunehmen, oder aber die Beine in eine annähernd gestreckte Position zu bringen, d.h. die Knie in sehr kleine Beugewinkel zu bringen. Erfindungsgemäß wird daher vorgesehen, dass die Fahrgastrückhaltevorrichtung den Fahrgast in einen Kniebeugewinkel von zumindest 90°, vorzugsweise aber größere Kniebeugewinkel, beispielsweise 100°, zwingt und hierdurch die Beine in einer abgewinkelten Position fixiert, welche ein aktives Herauswinden des Fahrgastes verhindert und zudem eine besonders sichere Fixierung des Fahrgastes über seine Beine erzielt, ohne dass hierbei insgesamt ein subjektives Gefühl starker Einengung oder Fixierung entsteht.

Dabei kann insbesondere vorgesehen sein, dass der Unterschenkelbügel, mit dem ersten und zweiten Führungshebel gekoppelt ist und durch den ersten und zweiten Führungshebel nach Art einer Parallelogramm- oder Trapez-Hebel-Anordnung geführt ist. So kann bei dieser Ausführungsform der Unterschenkelbügel insbesondere am ersten und zweiten Führungshebel im Bereich zwischen deren oberen und unteren Ende gekoppelt sein. Diese Ausführungsform ermöglicht eine synchrone Führung von Unterschenkelbügel und Rückhaltekörper und vermag daher mit einer einzigen Schließbewegung die gewünschte Fixierung des Fahrgastes zu erzielen.

Dabei ist es insbesondere bevorzugt, wenn der Unterschenkelbügel parallel zum Rückhaltekörper geführt ist. Durch diese parallele Führung von Unterschenkelbügel und Rückhaltekörper wird eine Eignung der erfindungsgemäßen Rückhaltevorrichtung für Fahrgäste unterschiedlicher Körperstatur sichergestellt, ohne dass hierzu Änderungen in Konstruktion und Dimensionierung der Vorrichtung erforderlich wären.

Weiterhin ist es bei der Fortbildung der Fahrgastrückhaltevorrichtung mit Unterschenkelbügel bevorzugt, wenn der Unterschenkelbügel U-förmig ausgebildet ist mit einem ersten, quer zur Längsachse des Unterschenkels ausgerichteten und an der Vorderseite der beiden Unterschenkel des sitzenden Fahrgastes anliegenden Hauptabschnitt, und zwei an den beiden Enden des Hauptabschnitts angeordneten Seitenhörnern, die sich etwa in Richtung der Längsachse des Oberschenkels des sitzenden Fahrgastes erstrecken und an den Unterschenkeln des sitzenden Fahrgastes seitlich anliegen. Durch diese U-förmige Ausgestaltung des Unterschenkelbügels kann sichergestellt werden, dass der Fahrgast nicht durch aktives Auswärtsschwenken der Unterschenkel aus der für eine sichere Fixierung angestrebten Beinhaltung aktiv herausgelangen kann und somit die Sicherheit der erfindungsgemäßen Rückhaltevorrichtung weiter erhöht werden.

Die eingangs beschriebene Fahrgastrückhaltevorrichtung oder die zuvor beschriebenen erfindungsgemäß fortgebildeten Fahrgastrückhaltevorrichtungen können gemäß eines weiteren Aspekts der Erfindung weiter fortgebildet werden durch einen Fahrgastsitz mit einer Sitzfläche und einer Rückenlehne, wobei die Sitzfläche zur Rückenlehne in einem Winkel von etwa 80° steht. Es hat sich erfindungsgemäß erwiesen, dass ein Winkel von etwa 80° oder weniger zwischen Sitzfläche und Rückenlehne den Fahrgast in eine für eine sichere Fixierung vorteilhafte Haltung bringt, ohne dass hierdurch ein subjektiver Eindruck starker Fixierung beim Fahrgast entsteht. Insbesondere dann, wenn diese Fahrgastsitz-Geometrie mit der erfindungsgemäßen Führung des Rückhaltekörpers durch zwei Führungshebel und den erfindungsgemäßen Unterschenkelbügel kombiniert wird, kann der Fahrgast in eine besonders günstige Z-förmige Haltung gebracht werden, welche für eine sichere Fixierung vorteilhaft ist und kein subjektiv stark empfundenes Einengungsgefühl beim Fahrgast erzeugt.

Die eingangs beschriebene oder die zuvor beschriebenen Rückhaltevorrichtungen können gemäß eines weiteren Aspekts der Erfindung fortgebildet werden durch einen Fahrgastsitz mit einer Sitzfläche und einer Rückenlehne, wobei auf der Unterseite der Sitzfläche zwei seitliche Unterschenkelanlageflächen ausgebildet sind, welche seitlich an den Unterschenkeln des sitzenden Fahrgastes anliegen. Diese Ausführungsform ermöglicht in ähnlicher Weise wie der zuvor beschriebene, U-förmige Unterschenkelbügel, dass eine Auswärtsrotation der Unterschenkel verhindert wird, indem die beiden Unterschenkel seitlich durch die Unterschenkelanlageflächen in ihrer Bewegung beschränkt werden. Die Ausführungsform eignet sich daher einerseits als alternative zur U-förmigen Ausbildung des Unterschenkelbügels, kann jedoch, um eine kompakte Ausgestaltung der seitlichen Führungsflächen der Unterschenkel am Unterschenkelbügel und an der Unterseite der Sitzfläche zu ermöglichen, auch mit dem U-förmigen Unterschenkelbügel kombiniert werden, um eine sichere Fahrgast-Fixierung ohne das Erfordernis besonders stark auskragender Bauelemente zu erreichen.

Dabei ist es bei Kombination der an der Unterseite der Sitzfläche angeordneten, seitlichen Unterschenkelanlageflächen mit dem U-förmigen Unterschenkelbügel insbesondere bevorzugt, wenn die Anlageflächen der Unterschenkel an den Seitenhörnern des U-förmigen Unterschenkelbügels fluchtend zu den auf der Unterseite der Sitzfläche ausgebildeten Unterschenkelanlageflächen angeordnet sind oder innerhalb des durch die Unterschenkelanlageflächen begrenzten Bereichs liegen. Auf diese Weise wird verhindert, dass die Unterschenkel des Fahrgastes beim Schließvorgang der Rückhaltevorrichtung zwischen den sitzflächenseitigen und unterschenkelbügelseitigen Elementen, weiche die Anlageflächen tragen, eingeklemmt wird.

Eine bevorzugte Ausführungsform der Erfindung wird anhand der anhängenden Figuren beschrieben. Es zeigen:
- Fig. 1:: eine perspektivische seitliche Ansicht einer Fahrgastgondel mit acht Fahrgastplätzen, welche mit der erfindungsgemäßen Rückhaltevorrichtung ausgerüstet sind,
- Fig. 2:: eine perspektivische Ansicht von schräg seitlich vorne eines Fahrgastsitzes mit einer erfindungsgemäßen Rückhaltevorrichtung in geöffnetem Zustand,
- Fig. 3:: eine perspektivische Ansicht des Fahrgastsitzes gemäß Figur 2 in geschlossenem Zustand,
- Fig. 4:: eine schematische Seitansicht der Anordnung gemäß Figur 2 mit einem im Fahrgastsitz angeordneten Fahrgast mit der Rückhaltevorrichtung in geöffneter Stellung,
- Fig. 5:: eine schematische Seitenansicht gemäß Figur 4 mit der Rückhaltevorrichtung in halbgeöffneter Stellung,
- Fig. 6:: eine schematische Seitenansicht gemäß Figur 4 mit der Rückhaltevorrichtung in geschlossener Stellung, und
- Fig. 7:: eine schematische Seitenansicht gemäß Figur 6 in Benutzung durch einen korpulenten Fahrgast, und
- Fig. 8:: eine schematische Seitenansicht gemäß Figur 6 in Benutzung durch einen Fahrgast, mit der maximal erlaubten Mindestkörpergröße.

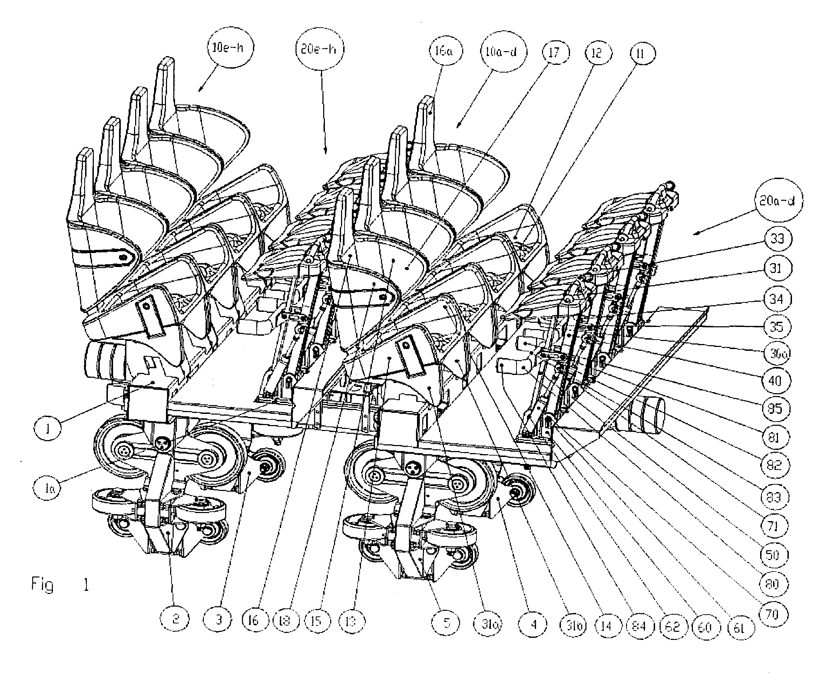

In Figur 1 ist eine Fahrgastgondel abgebildet, welche acht Fahrgastsitze 10a-h umfasst, die auf einem Chassis 1 angeordnet und befestigt sind, das wiederum mittels Rollenführungseinheiten 2-5 an einem Schienensystem einer Achterbahn geführt und gehalten wird.

Vor jedem der Fahrgastsitze 10a-h ist eine Fahrgastrückhaltevorrichtung 20a-h angeordnet.

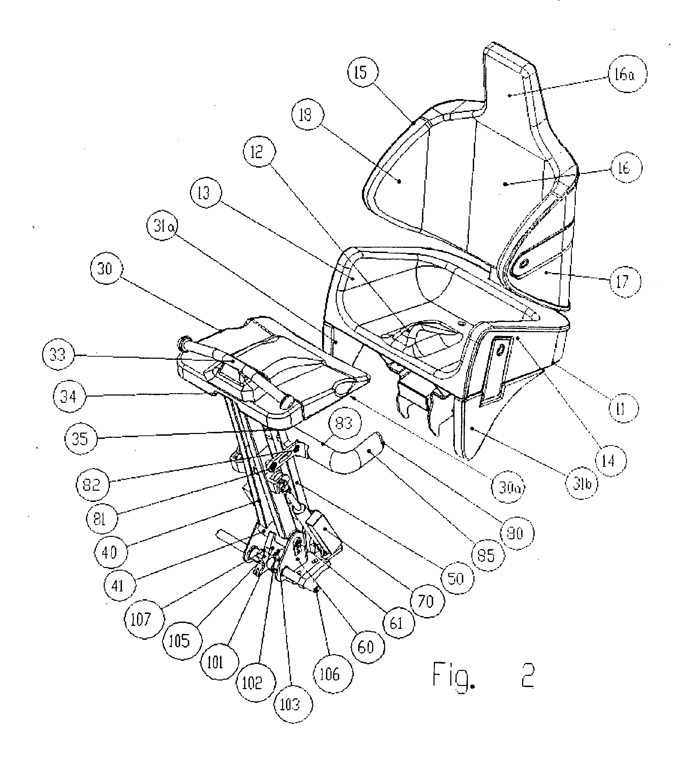

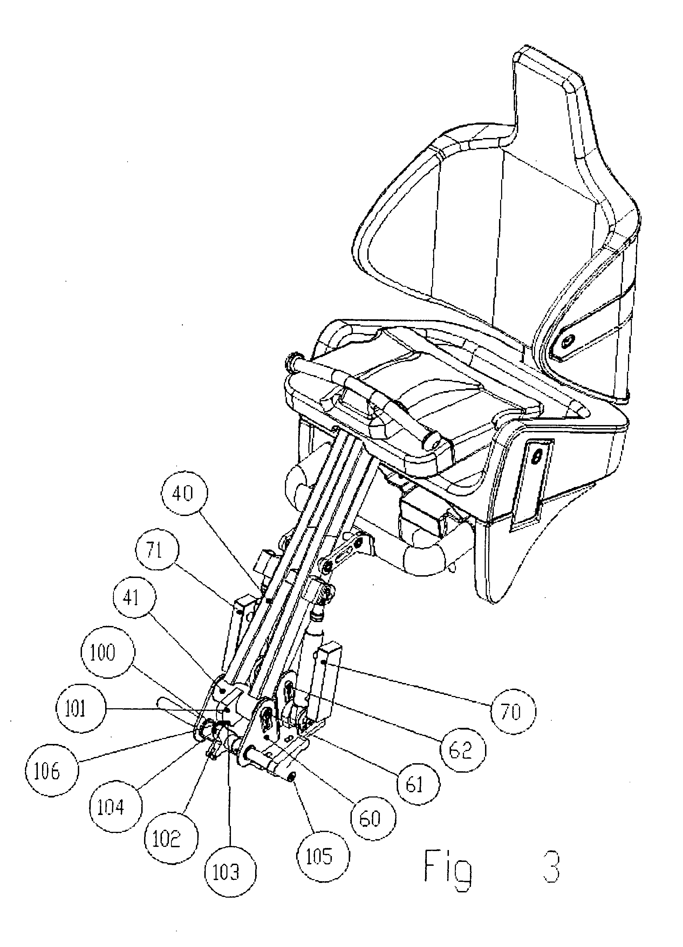

Die einzelnen Fahrgastsitze 10a-h und die ihnen jeweils zugeordnete Fahrgastrückhaltevorrichtungen 20a-h sind jeweils baugleich und werden anhand der Figuren 2 und 3 nachfolgend beschrieben:

Der Fahrgastsitz 1Oa umfasst eine Sitzschale 11, die aus einer anatomisch ausgeformten Sitzfläche 12 und seitlich die Oberschenkel und das Becken des sitzenden Fahrgastes umgreifenden Sitzwangen 13, 14 besteht. Der Sitz 10a umfasst weiterhin eine Rückenlehnenschale 15, die in ähnlicher Weise aus einer Rückenlehnenfläche 16 mit daran angeformtem Kopfstützenteil 16a sowie den Schulter- und Oberkörperbereich des sitzenden Fahrgastes seitlich umgreifenden Rückenlehnenwangen 17, 18 umfasst.

Auf der Unterseite der Sitzschale 11 sind zwei Formkörper 31 a, b befestigt, welche etwa fluchtend zu den Sitzwangen 13, 14 sind und nach unten ragen. Diese Formkörper 31a, b bilden auf ihren sich gegenüberliegenden Wandflächen Unterschenkelanlageflächen aus, die die Beweglichkeit der Unterschenkel des sitzenden Fahrgastes nach außen einschränken.

Die Sitzschale 11 und Rückenlehnenschale 15 sind starr auf der Plattform 1 der Fahrzeuggondel befestigt. Wie ersichtlich, sind die Sitzfläche 12 und die Rückenlehnenfläche 16 in einem Winkel von etwa 80° zueinander angeordnet und zwingen den Fahrgast daher in eine Sitzhaltung mit definiert angewinkelten Hüftgelenken (sog. Z-förmige Sitzhaltung). Optional kann der Sitz mit einem Einlegekissen für Kinder ausgeführt oder nachgerüstet werden, welches an der Rückenlehnenfläche 16 anliegt und die Rückenanlagefläche um 50mm vorverlegt, um solcherart den Abstand von Rückenlehnenfläche zu Vorderkante des Sitzes um 50mm zu verringern und ein Abwinkeln der Kinderbeine im Kniegelenk in der gewünschten Weise zu ermöglichen.

Die Sitzschale und Rückenlehnenschale des Fahrgastsitzes 10a sind aus glasfaserverstärktem Kunststoff (GFK) geformt und im Bereich aller mit dem Fahrgast Kontakt habenden Flächen mit eine Polyurethan(PU)-Schaumschicht ausgepolstert.

Vor dem Fahrgastsitz 10a ist eine Rückhaltevorrichtung 20a angeordnet, die einen Rückhaltekörper 30 umfasst. Der Rückhaltekörper 30 beinhaltet einen strukturtragenden und formgebenden Metallkern (nicht sichtbar), der allseits von PU umschäumt und hierdurch abgepolstert ist. Der Rückhaltekörper 30 umfasst auf seiner Unterseite eine Oberschenkelauflagefläche 30a, die anatomisch ausgeformt ist und zur Auflage auf den Oberschenkel des sitzenden Fahrgastes angepasst ist. Auf seiner Oberseite weist der Rückhaltekörper 30 eine Kontur auf, welche die Auflage der Unterarme des sitzenden Fahrgastes ermöglicht. Darüber hinaus ist auf der dem Fahrgastsitz 10a abgewandeten Seite des Rückhaltekörpers 30 ein Haltebügel 33 angeordnet, der quer zur Oberschenkelrichtung des sitzenden Fahrgastes ausgerichtet ist, an seinen beiden Enden mit zwei Handgriffen versehen ist, die um 20° nach unten geneigt sind und vergrößerte Griffenden gegen unbeabsichtigtes Abrutschen der Hände des Fahrgastes aufweisen.

Der Rückhaltekörper 30 ist mittels zwei parallel angeordneten Schwenkhebeln 40, 50 parallelogrammartig mit einer Bodenplatte 1a verbunden, die am Chassis 1 der Fahrgastgondel befestigt ist. Einer der parallel angeordneten Schwenkhebel ist ein Hauptarm 40, welcher die Seiten- und Torsionskräfte aufnimmt, die während der Fahrt auf den Rückhaltekörper 30 einwirken. Der andere der zwei parallel angeordneten Schwenkhebel ist als Sekundärarm 50 ausgebildet und dient lediglich dazu, Zug- und Druckkräfte zu übertragen, um die Parallelogramm-Führung des Rückhaltekörpers 30 zu erzielen. Beide Schwenkhebel sind in Gestalt einer doppelten Rohrkonstruktion als redundante Mechanik ausgeführt.

Der Hauptarm 40 ist mittels eines unteren Hauptarmgelenks 41 an einem unteren Lagerbock 60 um eine erste, untere Schwenkachse 61 schwenkbar gelagert. Der Sekundärarm 50 ist ebenfalls an dem unteren Lagerbock 60 um eine zweite untere Schwenkachse 62 schwenkbar gelagert. Der Lagerbock 60 ist mit der Bodenplatte des Chassis 1 fest verbunden. Erste und zweite untere Schwenkachse 61, 62 sind parallel zueinander und in Längsrichtung des Oberschenkels des sitzenden Fahrgastes bzw. in Fahrtrichtung voneinander beabstandet. Erste und zweite Schwenkachse 61, 62 liegen parallel zueinander, sind quer zur Oberschenkelrichtung und zur Unterschenkelrichtung des sitzenden Fahrgastes ausgerichtet und liegen somit horizontal.

Am Lagerbock 60 sind weiterhin zwei seitlich von Haupt- und Sekundärbügel angeordnete Sperr-Zylindereinheiten 70, 71 schwenkbar gelagert, die mit ihrem oberen Ende schwenkbar mit dem Hauptarm 40 verbunden sind. Die Sperrfunktion der Sperr-Zylindereinheiten 70, 71 erfolgt über elektrisch betätigte Magnetventile (nicht dargestellt). Bei Betätigen der Magnetventile wird die Fahrgastrückhaltevorrichtung mit Hilfe eines Druckspeichers (nicht dargestellt) automatisch geöffnet und kann zusätzlich in geöffneter Stellung verriegelt werden, um den Fahrgästen das Aussteigen zu erleichtern. Zusätzlich ist der Hauptarm 40 mit einer mechanischen Raste versehen, die bei Ausfall der beiden Sperrzylinder 70, 71 eingreift und das Öffnen des Rückhaltekörpers auf ein Maximalmaß von 340mm zur Rückenlehne begrenzt.

Figur 2 zeigt die Rückhaltevorrichtung in einem geöffneten Zustand. Figur 3 zeigt die Rückhaltevorrichtung in einem geschlossenen Zustand. Wie bei Vergleich der beiden Figuren 2 und 3 erkannt wird, wird der geschlossene Zustand durch Verschwenkung des Hauptarms 40 und des Sekundärarms 50 um die beiden unten liegenden Schwenkachsen 61, 62 erreicht, wobei zugleich der Rückhaltekörper 30 selbst um zwei oben liegende Achsen 34, 35 verschwenkt wird und durch diese Verschwenkung, die durch die Parallelogrammführung mittels der beiden Arme 40, 50 erzwungen wird, seine Winkelposition in Bezug auf den Boden bzw. in Bezug auf die Sitzauflagefläche des Fahrgastsitzes während des Schließvorgangs beibehält und folglich sowohl in der geöffneten Position gemäß Figur 2 als auch in der geschlossenen Position gemäß Figur 3 eine gleiche Winkelausrichtung zur Sitzauflagefläche einnimmt. Weiterhin wird durch die Parallelogrammführung des Rückhaltekörpers 30 eine Bewegungsform des Rückhaltekörpers 30 bewirkt, die eine im Wesentlichen horizontale Komponente an der zum Fahrgastsitz weisenden Kante des Rückhaltekörpers 30 bewirkt, die durch eine lediglich geringfügige vertikale Komponente überlagert ist.

Am unteren Ende des Hauptarms 40 ist eine redundante mechanische Verriegelungsvorrichtung 100 angeordnet. Die mechanische Verriegelungsvorrichtung 100 umfasst einen starr mit dem Hauptarm 40 verbundenen Verriegelungsvorsprung 101, der gemeinsam mit dem Hauptarm 40 um die erste untere Drehachse 61 rotiert. Am Verriegelungsvorsprung 101 sind zwei Verriegelungsflächen 102, 103 ausgebildet, die etwa senkrecht zu einer Tangentialrichtung um die Schwenkachse 61 ausgerichtet sind.

Beide Verriegelungsflächen 102, 103 wirken mit einem Verriegelungskörper 105 zusammen, der schwenkbar um eine von der ersten unteren Schwenkachse 61 beabstandete Verriegelungskörperachse 106 gelagert ist, die parallel zur ersten unteren Schwenkachse 61 ausgerichtet ist. Der Verriegelungskörper 105 greift mit einer Verriegelungskante 107 in eine der Verriegeiungsflächen 102, 103 ein, wenn der Hauptarm 40 so weit in die geschlossene Stellung verschwenkt wird, dass die Verriegelungsflächen 102 bzw. 103 in den Bereich des Verriegelungskantenabschnitts 107 des Verriegelungskörpers 105 gelangen. Durch die Bereitstellung von zwei Verriegelungsflächen 102 und 103 werden zwei Verriegelungsstellungen des Hauptarms 40 bereitgestellt.

Am oberen Ende sind Haupt- und Sekundärarm in den Rückhaltekörper 30 eingelassen und schwenkbar am Metallkern des Rückhaltekörpers 30 um eine obere erste Schwenkachse 34 bzw. eine obere zweite Schwenkachse 35 gelagert, die in gleicher Weise wie die untere erste und zweite Schwenkachse 61, 62 ausgerichtet sind, parallel zueinander liegen und in Fahrtrichtung voneinander beabstandet sind.

Auf etwa halber Höhe des Haupt- und Sekundärarms 40, 50 ist ein Unterschenkelbügel 80 über eine am Hauptarm 40 angelenkte Hauptunterschenkelbügelachse 81 und eine am Sekundärarm 50 angelenkte Sekundär-Unterschenkelbügelachse 82 befestigt. Der Unterschenkelbügel 80 wird auf diese Weise in gleicher Art parallelogramm-geführt wie der Rückhaltekörper 30.

Der Unterschenkelbügel 80 ist U-förmig, wobei eine Basis 83 des Unterschenkelbügels als Anlagefläche für die Vorderseite der Unterschenkel des Fahrgastes dient und zwei seitliche Schenkel 84, 85 die Unterschenkel des Fahrgastes auf ihrer Außenseite seitlich umgreifen.

Der U-förmige Unterschenkelbügel 80 ist somit synchron zur Parallelogrammführung des Rückhaltekörpers 30 an den beiden parallel angeordneten Haupt- bzw. Sekundärarmen 40, 50 befestigt und erzwingt beim Schließen der Rückhaltevorrichtung ein Abwinkeln und Einschließen der Beine des Fahrgastes. Der Unterschenkelbügel 80 weist wiederum einen metallischen Kern mit PU-Umschäumung als Polsterung auf und hat einen elliptischen Querschnitt, um solcherart eine großflächige Auflage an den Unterschenkeln des Fahrgastes und somit eine Verhinderung von Druckstellen und Schmerzen zu erzielen.

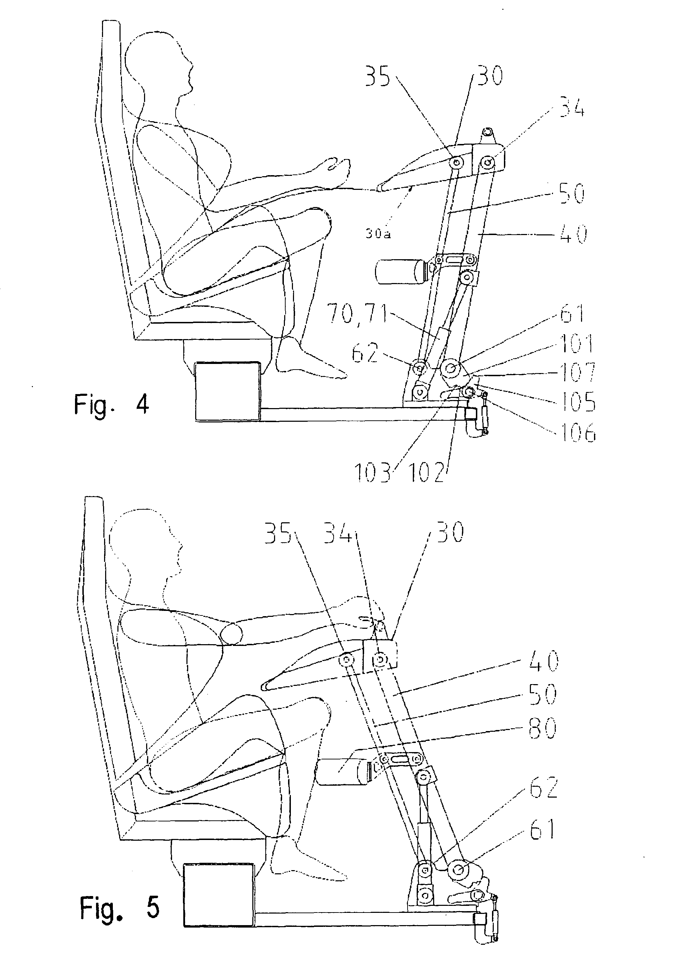

In den Figuren 4 bis 6 ist der Schließvorgang des Sicherheitsbügels aus einer offenen in eine geschlossene Stellung schematisch abgebildet. Wie in Figur 4 ersichtlich ist, verbleibt zwischen der in der geöffneten Stellung angeordneten Rückhaltevorrichtung und dem Fahrgastsitz ein ausreichend großer Raum, um dem Fahrgast das Einsteigen in den Fahrgastsitz zu ermöglichen.

Aus der geöffneten Stellung in Figur 4 wird die Rückhaltevorrichtung durch Verschwenkung von Hauptarm 40 und Sekundärarm 50 um die im Bodenbereich angeordneten unteren Schwenkachsen 61, 62 in die geschlossene Stellung bewegt. Der Rückhaltekörper 30 behält dabei im Wesentlichen oder genau in Relation zum Boden bzw. zur Fahrgastsitzfläche die Winkelstellung bei, die er bereits im geöffneten Zustand eingenommen hat, indem er in Relation zum Hauptarm 40 und Sekundärarm 50 um die beiden oberen Achsen 34, 35 verschwenkt wird.

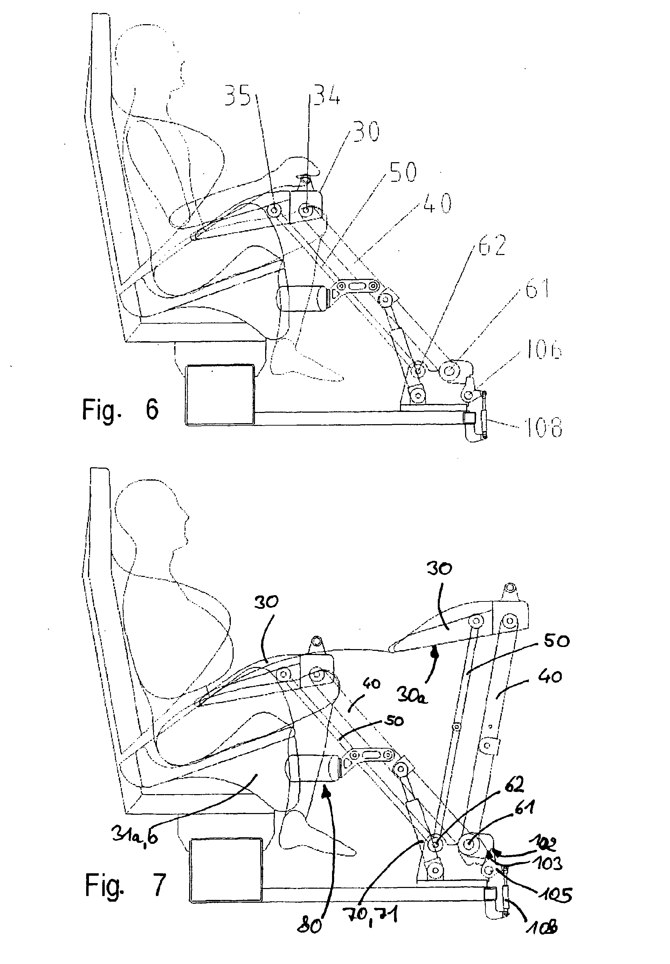

Figur 6 zeigt die Rückhaltevorrichtung in der geschlossenen Position. Man erkennt, dass der Rückhaltekörper 30 in der gleichen Winkelstellung in Bezug zum Boden ausgerichtet ist wie in der geöffneten Stellung gemäß Figur 4 bzw. einer teilgeöffneten Stellung, wie beispielsweise der in Figur 5 gezeigten Stellung. In der in Figur 6 gezeigten geschlossenen Stellung liegt der Rückhaltekörper 30 mit seiner Oberschenkelauflagefläche 30a auf den Oberschenkeln des Fahrgastes auf und fixiert die Oberschenkel auf diese Weise im Fahrgastsitz. Weiterhin liegt der Unterschenkelbügel 80 an der Vorderseite der Unterschenkel des Fahrgastes an und zwingt diese dadurch in eine im Kniegelenk um etwa 100° Beugewinkel abgewinkelte Stellung. Aus den Figuren 4 bis 6 ist weiterhin zu erkennen, dass der Unterschenkelbügel 80 sowohl in der geöffneten als auch in einer teilgeöffneten oder der geschlossenen Stellung eine stets gleiche Winkelstellung gegenüber dem Boden einnimmt, was durch die ebenfalls parallelogrammartige Führung des Unterschenkelbügels 80 an dem Hauptarm 40 und Sekundärarm 50 gewährleistet wird.

Wie aus den Figuren 4-6 zu erkennen ist, wird der Rückhaltekörper 30 durch die erfindungsgemäße Rückhaltevorrichtungskinematik mit einer Bewegungsbahn auf die Oberschenkel des Fahrgastes aufgelegt, die im Wesentlichen horizontal verläuft und nur einen geringen vertikalen Bewegungsanteil enthält. Figur 7 verdeutlicht den Vorteil der so erzielten Bewegungsform des Rückhaltekörpers 30 anhand eines korpulenten Fahrgastes. Wie erkannt wird, kann die Bewegungsbahn des Rückhaltekörpers 30 der erfindungsgemäßen Rückhaltevorrichtung nicht durch den vorspringenden Bauchbereich des Fahrgastes gehindert werden, wodurch auch bei korpulenten Fahrgästen eine sichere Rückhaltefunktion durch korrekte Platzierung des Rückhaltekörpers bis in den Beckenbereich des Fahrgastes erzielt wird.

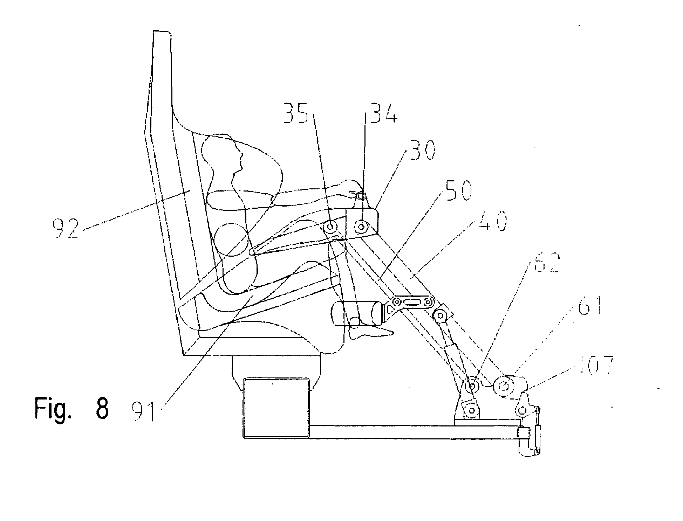

Figur 8 zeigt die erfindungsgemäße Rückhaltevorrichtung in der Funktion zur Rückhaltung eines kindlichen Fahrgastes im Fahrgastsitz. Zu diesem Zweck ist in den Fahrgastsitz eine Aufpolsterung eingesetzt, die aus einer Sitzflächen-Aufpolsterung 91 und einer Rückenlehnen-Aufpolsterung 92 besteht und bewirkt, dass das Kind einerseits höher zu sitzen kommt und andererseits weiter vorne zu sitzen kommt. Durch diese Platzierung des Kindes werden sowohl der Beckenbereich als auch der Kniegelenkbereich des Kindes weiter vorne im Sitz angeordnet als dies der Fall wäre, wenn eine Aufpolsterung nicht verwendet würde. Durch die Aufpolsterung wird somit ermöglicht, dass das Kniegelenk des Kindes am vorderen Ende der Sitzauflagefläche zu liegen kommt und der Unterschenkel folglich ebenso wie bei einem erwachsenen Fahrgast abgewinkelt werden kann. Weiterhin wird erreicht, dass das Becken des Kindes solcherart zu liegen kommt, dass der Rückhaltekörper 30 in wiederum idealer Weise bis in den Beckenbereich die Oberschenkel des Kindes erfassen und zurückhalten kann, wodurch eine sichere Fixierung des Kindes erzielt wird.

Aus den Figuren 4-6 ist weiterhin die Funktionsweise der mechanischen Verriegelungsvorrichtung 100 erkennbar. Wie in Figur 4 erkennbar, ist in der geöffneten Stellung der Rückhaltevorrichtung weder die Verriegelungsfläche 102 noch die Verriegelungsfläche 103 im Eingriff mit der Verriegelungskante 107 des Verriegelungskörpers 105. Durch Verschwenkung des Hauptarms 40 werden die Verriegelungsflächen 102, 103 am Verriegelungsvorsprung 101 gegenüber dem Verriegelungskörper 105 verschwenkt und rasten, wie in Figur 6 ersichtlich, bei einem bestimmten Verschwenkungswinkel, welcher einer geschlossenen Position der Rückhaltevorrichtung entspricht, so mit der Verriegelungskante 107 ein, dass die geschlossene Position der Rückhaltevorrichtung verriegelt wird. Dabei stehen durch die Verriegelungsflächen 102, 103 zwei geschlossene Verriegelungspositionen zur Verfügung, nach Möglichkeit ist jeweils die weitergehende, geschlossene Verriegelungsposition anzustreben, die durch Verriegelung der Verriegelungskante 107 an der Verriegelungsfläche 103 verriegelt wird.

Die Verriegelungskante 107 am Verriegelungskörper 106 wird durch einen steuerbaren Zylinder 108 in die Verriegelungsposition gedrückt und kann durch Ansteuerung des Zylinders 108 wieder aus dieser Verriegelungsposition herausgeschwenkt werden.

## Patentansprüche

1. Fahrgastrückhaltevorrichtung für Fahrgeschäfte, umfassend:
- einen Rückhaltekörper (30) mit einer Beinauflagefläche (30a), die zum Auflegen auf die Oberschenkel des Fahrgastes ausgebildet ist,
- einen ersten Führungshebel (40), der an seinem ersten Ende am Rückhaltekörper befestigt ist und mit seinem zweiten Ende schwenkbar im Bodenbereich vor einem Fahrgastsitz eines Fahrgeschäftes solcherart angekoppelt ist, dass der Rückhaltekörper in Bezug auf den Fahrgastsitz um eine quer zur Längsachse des Oberschenkels des sitzenden Fahrgastes liegende erste untere Achse (61) aus einer geöffneten Stellung in eine geschlossene Stellung verschwenkt werden kann,
**dadurch gekennzeichnet, dass**
- der erste Führungshebel an seinem ersten Ende um eine parallel zur ersten unteren Achse liegende erste obere Achse (34) schwenkbar mit dem Rückhaltekörper gekoppelt ist und
- benachbart zum ersten Führungshebel ein zweiter Führungshebel (50) angeordnet ist, der
i. in einer quer zur ersten unteren Achse liegenden Richtung vom ersten Führungshebel beabstandet ist, und solcherart
ii. an seinem ersten Ende um eine parallel und beabstandet zur ersten oberen Achse angeordnete zweite obere Achse (35) schwenkbar mit dem Rückhaltekörper gekoppelt ist, und
iii. an seinem zweiten Ende um eine parallel und beabstandet zur ersten unteren Achse angeordnete zweite untere Achse (62) schwenkbar im Bereich der Fahrgast-Fußauflage eines Fahrgeschäftes angekoppelt ist,
iv. dass der Rückhaltekörper durch den ersten und zweiten Führungshebel (40, 50) nach Art einer Parallelogramm- oder Trapez-Hebel-Anordnung geführt ist.

2. Fahrgastrückhaltevprrichtung nach Anspruch 1,
**dadurch gekennzeichnet, dass** der erste und zweite Führungshebel parallel zueinander geführt sind.

3. Fahrgastrückhaltevorrichtung nach Anspruch 1 oder 2,
**dadurch gekennzeichnet, dass** der erste und zweite Führungshebel in Richtung der Längsachse des Oberschenkels des sitzenden Fahrgastes hintereinander angeordnet sind.

4. Fahrgastrückhaltevorrichtung nach einem der vorhergehenden Ansprüche,
**gekennzeichnet durch** zumindest einen Linearaktuator (70; 71) zum Verschwenken des Rückhaltekörpers zwischen der geöffneten und der geschlossenen Stellung, der mit seinem ersten Ende schwenkbar mit dem ersten oder zweiten Führungshebel gekoppelt ist und mit seinem zweiten Ende schwenkbar im Bodenbereich vor dem Fahrgastsitz des Fahrgeschäftes befestigt ist.

5. Fahrgastrückhaitevorrichtung nach einem der vorhergehenden Ansprüche ,
**gekennzeichnet durch** einen Unterschenkelbügel (80), der mit dem ersten und/oder zweiten Führungshebel gekoppelt und solcherart quer zur Längsachse des Unterschenkels des sitzenden Fahrgastes angeordnet ist, dass **durch** Anliegen des Unterschenkelbügels an der Vorderseite der Unterschenkel des sitzenden Fahrgastes ein Kniebeugewinkel von mindestens 90°, vorzugsweise 100° erzwungen wird.

6. Fahrgastrückhaltevorrichtung nach dem vorhergehenden Anspruch,
**dadurch gekennzeichnet, dass** der Unterschenkelbügel, mit dem ersten und zweiten Führungshebel gekoppelt ist und durch den ersten und zweiten Führungshebel nach Art einer Parallelogramm- oder Trapez-Hebel-Anordnung geführt ist.

7. Fahrgastrückhaltevorrichtung nach dem vorhergehenden Anspruch,
**dadurch gekennzeichnet, dass** der Unterschenkelbügel parallel zum Rückhaltekörper geführt ist.

8. Fahrgastrückhaltevorrichtung nach einem der drei vorhergehenden Ansprüche,
**dadurch gekennzeichnet, dass** der Unterschenkelbügel U-förmig ausgebildet ist mit
- einem ersten, quer zur Längsachse des Unterschenkels ausgerichteten und an der Vorderseite der beiden Unterschenkel des sitzenden Fahrgastes anliegenden Hauptabschnitt (83), und
- zwei an den beiden Enden des Hauptabschnitts angeordneten Seitenhömern (84, 85), die sich etwa in Richtung der Längsachse des Oberschenkels des sitzenden Fahrgastes erstrecken und an den Unterschenkeln des sitzenden Fahrgastes seitlich anliegen.

9. Fahrgastrückhaltevorrichtung nach einem der vorhergehenden Ansprüche, umfassend einen Fahrgastsitz mit einer Sitzfläche (12) und einer Rückeniehnenfläche (16),
**dadurch gekennzeichnet, dass** die Sitzfläche zur Rückenlehnenfläche in einem Winkel von etwa 80° steht.

10. Fahrgastrückhaltevorrichtung nach einem der Ansprüche 5-8, umfassend einen Fahrgastsitz mit einer Sitzfläche (12) und einer Rückenlehnenfläche (16),
**dadurch gekennzeichnet, dass** auf der Unterseite der Sitzfläche zwei seitliche Unterschenkelanlageflächen (31a, b) ausgebildet sind, welche seitlich an den Unterschenkeln des sitzenden Fahrgastes anliegen.

11. Fahrgastrückhaltevorrichtung nach dem vorhergehenden Anspruch,
**dadurch gekennzeichnet, dass** die Anlageflächen der Unterschenkel an den Seitenhörnem (84, 85) des U-förmigen Unterschenkelbügels (80) fluchtend zu den auf der Unterseite der Sitzfläche ausgebildeten Unterschenkelanlageflächen (31 a, b) angeordnet sind oder innerhalb des durch die Unterschenkelanlageflächen begrenzten Bereichs liegen.

## Claims

1. A passenger restraining device for amusement rides, including:
- a restraining body (30) with a leg resting surface (30a) configured to rest on the thighs of the passenger,
- a first guide lever (40) which is attached at its first end to the restraining body and is pivotably coupled by means of its second end in the floor area in front of a passenger seat of an amusement ride such that the restraining body can be pivoted with respect to the passenger seat from an open position into a closed position about a first lower axle (61), which is transverse to the longitudinal axis of the thigh of the sitting passenger,
**characterised in that**
- the first guide lever is pivotably coupled at its first end to the restraining body about a first upper axle (34), which is parallel to the first lower axle, and
- there is disposed adjacent to the first guide lever a second guide lever (50), which
i. is spaced apart from the first guide lever in a direction which is transverse to the first lower axle, and in a manner
ii. is pivotably coupled at its first end about a second upper axle (35), which is disposed parallel to and spaced apart from the first upper axle, to the restraining body, and
iii. is pivotably coupled at its second end about a second lower axle (62), which is disposed parallel to and spaced apart from the first lower axle, in the area of the passenger footrest of an amusement ride,
iv. such that the restraining body is guided by the first and second guide levers (40, 50) in the manner of a parallelogram or trapezoid-lever arrangement.

2. The passenger restraining device according to Claim 1,
**characterised in that** the first and second guide levers are guided parallel to each other.

3. The passenger restraining device according to Claim 1 or 2,
**characterised in that** the first and second guide levers are disposed one after another in the direction of the longitudinal axis of the thigh of the sitting passenger.

4. The passenger restraining device according to one of the previous claims,
**characterised by** at least one linear actuator (70, 71) for pivoting the restraining body between the open and the closed position, which is pivotably coupled by its first end to the first or second guide lever and is pivotably attached by its second end in the floor area in front of the passenger seat of the amusement ride.

5. The passenger restraining device according to one of the previous claims,
**characterised by** a lower leg retainer (80) which is coupled to the first and/or the second guide lever and is disposed transverse to the longitudinal axis of the lower leg of the sitting passenger in such a manner that by fitting the lower leg retainer against the front of the lower leg of the sitting passenger, a bending angle of the knee of at least 90°, preferably 100 °, is enforced.

6. The passenger restraining device according to the previous claim,
**characterised in that** the lower leg retainer is coupled to the first and second guide levers and is guided by the first and second guide levers in the manner of a parallelogram or trapezoid lever arrangement.

7. The passenger restraining device according to the previous claim,
**characterised in that** the lower leg retainer is guided parallel to the restraining body.

8. The passenger restraining device according to one of the three previous claims,
**characterised in that** the lower leg retainer has a U-shaped configuration, having
- a first main portion (83), which is oriented transverse to the longitudinal axis of the lower leg and is fitted against the front of the two lower legs of the sitting passenger, and
- two lateral flanges (84, 85) disposed on either end of the main portion, which extend approximately in the direction of the longitudinal axis of the thigh of the sitting passenger and which are laterally fitted against the lower legs of the sitting passenger.

9. The passenger restraining device according to one of the previous claims, including a passenger seat having a seating surface (12) and a backrest surface (16),
**characterised in that** the seating surface has an angle of approximately 80 ° in relation to the backrest surface.

10. The passenger restraining device according to one of the claims 5-8, including a passenger seat having a seating surface (12) and a backrest surface (16), **characterised in that** on the lower side of the seating surface there are configured two lateral lower leg fitting surfaces (31 a, b) which are fitted laterally against the lower legs of the sitting passenger.

11. The passenger restraining device according to the previous claim,
**characterised in that** the fitting surfaces of the lower legs on the lateral flanges (84, 85) of the U-shaped lower leg retainer (80) are disposed flush with the lower leg fitting surfaces (31 a, b) configured on the lower side of the seating surface or are located within the area limited by the lower leg fitting surfaces.

## Revendications

1. Dispositif de retenue du passager pour attractions foraines, comprenant :
- un corps de retenue (30) avec une surface d'appui des jambes (30a), qui est conçue pour être posée sur les cuisses du passager,
- un premier levier de guidage (40), qui est fixé à sa première extrémité au niveau du corps de retenue et est accouplé avec sa deuxième extrémité de manière pivotante dans la zone du sol devant un siège passager d'une attraction foraine de telle manière que le corps de retenue peut être pivoté par rapport au siège passager autour d'un premier axe inférieur (61) situé transversalement par rapport à l'axe longitudinal de la cuisse du passager assis d'une position ouverte à une position fermée,
**caractérisé en ce que**
- le premier levier de guidage est couplé au niveau de sa première extrémité avec le corps de retenue de manière pivotante autour d'un premier axe supérieur (34) situé parallèlement au premier axe inférieur et
- un deuxième levier de guidage (50) est agencé de manière adjacente au premier levier de guidage, lequel
i. est éloigné du premier levier de guidage dans un sens transversal au premier axe inférieur et
ii. couplé au niveau de sa première extrémité avec le corps de retenue de manière pivotante autour d'un deuxième axe supérieur (35) agencé parallèlement et à distance du premier axe supérieur, et
iii. accouplé au niveau de sa deuxième extrémité dans la zone du repose-pied du passager d'une attraction foraine de manière pivotante autour d'un deuxième axe inférieur (62) agencé parallèlement et à distance du premier axe inférieur,
iv. de telle manière que le corps de retenue est guidé par le premier et le deuxième levier de guidage (40, 50) à la manière d'un ensemble levier parallélogramme ou trapèze.

2. Dispositif de retenue du passager selon la revendication 1,
**caractérisé en ce que** le premier et le deuxième levier de guidage sont guidés parallèlement l'un à l'autre.

3. Dispositif de retenue du passager selon la revendication 1 ou 2,
**caractérisé en ce que** le premier et le deuxième levier de guidage sont agencés l'un derrière l'autre dans le sens de l'axe longitudinal de la cuisse du passager assis.

4. Dispositif de retenue du passager selon l'une quelconque des revendications précédentes,
**caractérisé par** au moins un actionneur linéaire (70 ; 71) servant à pivoter le corps de retenue entre la position ouverte et la position fermée, qui est couplé avec sa première extrémité de manière pivotante avec le premier ou le deuxième levier de guidage et est fixé avec sa deuxième extrémité de manière pivotante dans la zone du sol devant le siège passager de l'attraction foraine.

5. Dispositif de retenue du passager selon l'une quelconque des revendications précédentes,
**caractérisé par** un étrier pour jambes (80), qui est couplé avec le premier et/ou le deuxième levier de guidage et est agencé transversalement à l'axe longitudinal de la jambe du passager assis de telle manière que l'appui de l'étrier pour jambes contre l'avant des jambes du passager assis impose un angle de flexion du genou d'au moins 90°, de préférence 100°.

6. Dispositif de retenue du passager selon la revendication précédente,
**caractérisé en ce que** l'étrier pour jambes est couplé avec le premier et le deuxième levier de guidage et est guidé par le premier et le deuxième levier de guidage à la manière d'un ensemble levier parallélogramme ou trapèze.

7. Dispositif de retenue du passager selon la revendication précédente,
**caractérisé en ce que** l'étrier pour jambes est guidé parallèlement au corps de retenue.

8. Dispositif de retenue du passager selon l'une quelconque des trois revendications précédentes,
**caractérisé en ce que** l'étrier pour jambes est réalisé en forme de U avec
- une première section principale (83) dirigée transversalement à l'axe longitudinal de la jambe et s'appuyant contre l'avant des deux jambes du passager assis et
- deux cornes latérales (84, 85) agencées aux deux extrémités de la section principale, qui s'étendent à peu près dans le sens de l'axe longitudinal de la cuisse du passager assis et s'appuient contre les jambes du passager assis.

9. Dispositif de retenue du passager selon l'une quelconque des revendications précédentes, comprenant un siège passager avec une assise (12) et un dossier (16),
**caractérisé en ce que** l'assise se trouve à un angle d'environ 80° par rapport au dossier.

10. Dispositif de retenue du passager selon l'une quelconque des revendications 5 à 8, comprenant un siège passager avec une assise (12) et un dossier (16), **caractérisé en ce que** deux surfaces d'appui latérales des jambes (31a, b) sont réalisées sur la face inférieure de l'assise lesquelles s'appuient latéralement contre les jambes du passager assis.

11. Dispositif de retenue du passager selon la revendication précédente,
**caractérisé en ce que** les surfaces d'appui des jambes au niveau des cornes latérales (84, 85) de l'étrier pour jambes (80) en forme de U sont alignées avec les surfaces d'appui des jambes (31a, b) réalisées sur la face inférieure de l'assise ou se situent à l'intérieur de la zone délimitée par les surfaces d'appui des jambes.
